# EUROPEAN PATENT SPECIFICATION

(11) **EP 1 464 203 B1**
(45) Date of publication and mention of the grant of the patent: **03.09.2008**
(21) Application number: 03729268.7
(22) Date of filing: 09.01.2003
(51) Int. Cl.: H04Q 7/38, H04Q 7/22

(54) **METHOD FOR BROADCASTING OF A POSSIBILITY TO USE 3G MOBILE COMMUNICATION NETWORK**
VERFAHREN ZUM RUNDSENDEN EINER MÖGLICHKEIT, EIN 3G-MOBILKOMMUNIKATIONSNETZ ZU VERWENDEN
PROCEDE DE DIFFUSION D'UNE POSSIBILITE D'UTILISER UN RESEAU DE COMMUNICATION MOBILE 3G

(30) Priority: 10.01.2002 FI 20020048
(43) Date of publication of application: 06.10.2004
(73) Proprietor: Nokia Corporation, 02150 Espoo (FI)
(72) Inventor: SEBIRE, Guillame, FIN-02780 Espoo (FI); VAITTINEN, Rami, Singapore 249567 (SG)
(74) Representative: Brax, Matti Juhani
(86) International application number: PCT/FI2003/000013
(87) International publication number: WO 2003/058995

(56) References cited:
- WO-A1-00/62573
- US-A1- 2001 036 827
- US-A1- 2002 111 180
- US-A1- 2002 193 139

## Description

The invention relates to a method with which cellular network terminals are informed of a possibility to use services of a 3G mobile communication networks in a radio access network.

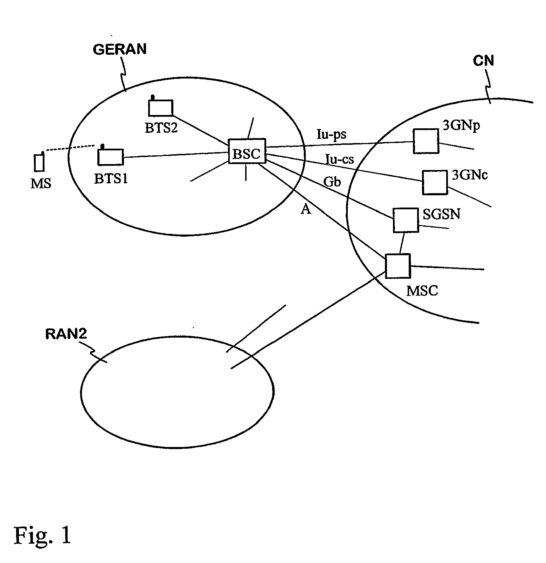

So-called third generation mobile communication network means an extension of the present mobile communication networks, which increases and improves services of the network. The abbreviation UMTS (Universal Mobile Telecommunications System) is often used of third generation or 3G mobile communication network. Figure 1 shows a simplified example of the structure of a GSM (Global System for Mobile communications) type mobile communication network. The network comprises a core network CN and radio access networks RAN. Core network includes traditional GSM centres and normally also other service nodes. Figure 1 shows one traditional GSM centre MSC (Mobile Switching Centre) and one SGSN (Serving GPRS Support Node) handling packet switched information transfer, in which GPRS means corresponding service (General Packet Radio Service). Furthermore, in the core network of the example can be seen two 3G service nodes, 3GNs and 3GNp. Radio access networks are located between the core network and network terminals. A radio access network includes one or more base transceiver stations BTS and a base station controller BSC. Each base transceiver station has a fixed connection to the base station controller of the area in question, which BSC in turn has a fixed connection to at least one core network node. Connection to a conventional GSM centre corresponds to so-called A interface service mode, connection to a SGSN node corresponds to so-called Gb interface service mode (same as GPRS) and connection to a 3G node corresponds to so-called Iu interface service mode. This can be cs type (circuit switched), or ps type (packet switched). Radio access network GERAN (GSM/EDGE RAN), EDGE = Enhanced Data rates for Global Evolution, in figure 1 has said four connections to the core network. Naturally a GERAN does not necessarily have all types of interfaces.

In the traffic area, or cell of a base transceiver station BTS1 of the network GERAN is also shown one terminal, i.e. mobile station MS. A "GERAN cell" means in this description that kind of cell, which is under control of a GERAN. Moreover, Figure 1 shows another radio access network RAN2. This can be e.g. GERAN or UTRAN (UMTS Terrestrial RAN).

Each frequency division channel of a digital mobile communication system includes, in addition to traffic channels, a group of control channels realized by means of time division. To control channels belong e.g. broadcast control channels (BCCH in the GSM system) intended to be traced by all mobile stations in the area, common control channels used jointly by certain mobile stations, and dedicated control channels and associated control channels used by each mobile station individually during speech or data connection. In a cell supporting GPRS, GPRS-specific control channels may be used in addition to the control channels required in a basic GSM system, namely PBCCH (Packet Broadcast Control Channel) and PCCCH (Packet Common Control Channel), or P channels. A GERAN supporting Iu requires these P channels in the cells where UMTS service through the Iu interface is provided irrespective whether this GERAN supports GPRS.

Control information of different layers is transferred in channels in messages having defined format. The present invention relates to the operation of layer 3, i.e. network layer as regards radio access networks, in other words to controlling of so-called radio resources RR. There are several groups of RR messages, among which are system level broadcast messages, or SI (System Information) messages. These are aimed at broadcasting information that is needed for the mobile station to operate properly in the system in question.

Message SI3 is sent at relatively short intervals on the BCCH. It has room e.g. for GPRS indicator, which informs mobile stations whether GPRS service is supported in the cell in question or not. Further information concerning GPRS service in this cell is sent in a message SI13 to the BCCH of this cell. In cells that support GPRS service could in principle also Iu support-related information be sent on the BCCH for example in messages SI13. In a GERAN cell that supports UMTS service but not GPRS service this possibility does not exist, because SI13 messages are then not sent. From conference publication "Service Modes and System Information" (November 26-30, 2001), Ericsson Ltd, is known a proposal for adding a two-bit field in the part of the message SI3. The field would inform mobile stations about the Iu service mode. However, there is only one spare bit left in the SI3 Rest Octets at present. There is no room for the required information in other messages sent regularly to the BCCH.

From document US 2001/ 036827 is known a method for providing, when possible, mobile terminals with UMTS services. The usual GSM cells having a neighboring UMTS cell notifies mobile terminals about vicinity of the UMTS in the broadcast control channel. For the notification e.g. a spare bit in the message SI2bis or SI2ter is used. After a terminal, being located in a GSM cell, has detected said notification, it requires information required by use of the UMTS services, and the UMTS cell controller sends said information. Measurements started by the terminal can be related to the operation to perceive the UMTS connection

From document WO 00/62573 is known a method for notifying users, which are visiting on the area of a cellular network, of the services not supported by that network. The network controller sends in the broadcast control channel a message, which includes the supported services. If a user then tries to employ a non-supported service, a notification informing about the matter is displayed on the terminal screen.

An object of the invention is to implement a method for broadcasting of a possibility to use UMTS service in a new and more versatile way than in the known methods. The method according to the invention is characterized by what is specified in the independent claim 1. Some preferred embodiments of the invention are specified in the other claims.

The basic idea of the invention is as follows: A spare bit of the broadcast message SI3 of GSM system is defined as a bit indicating, whether the current GERAN cell supports UMTS service through the Iu interface or not. In a favourable case, another SI message is broadcast including a description of the PBCCH where Iu information for mobile stations is placed. Should the GERAN support also the GPRS service, said another message is SI13, and if the GERAN does not support the GPRS service, said another message is SI13alt. This message can only be employed by UMTS capable mobile stations.

An advantage of the invention is that the information presumed by the use of the UMTS network can quickly be acquired by a mobile station, which for example arrives in a GERAN cell. The speed is based on the use of a SI3 message sent in the BCCH.

Of course the advantage only relates to mobile stations being capable of using UMTS service through GERAN Iu interface. "Iu mobile station" in this description and patent claims means such a mobile station. Correspondingly, "Gb mobile station" means a mobile station being capable of using GPRS service through GERAN Gb interface.

In the following the invention is explained in more detail. The description refers to the attached drawings, in which
- Fig. 1: shows a basic structure of a GSM type mobile communication network,
- Fig. 2: shows a prior art rest part of SI3 message,
- Fig. 3: shows a rest part of SI3 message according to the invention, and
- Fig. 4: shows in a flow chart an example of the method according to the invention.

Figure 1 is already described in the introduction of the description.

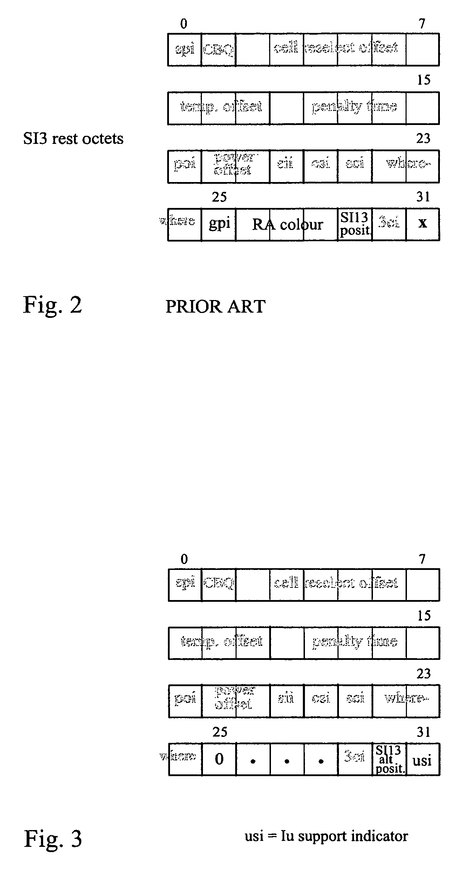

In Figure 2 there is a diagram of the rest part of the SI3 message having four octets. The form of the rest octets is valid at present (Release 4 of 3GPP). In the diagram there are marked with grey those fields, which are mostly linked with the handover of servicing base transceiver station during a speech connection, and are non-substantial from the point of view of the present invention. Bit number 25 (gpi) in rest octets indicates the presence of the GPRS indicator and informs, whether the current GERAN cell supports the GPRS service or not. If the bit gpi is "low", GPRS is not supported and the GPRS indicator is not present. If the bit gpi is "high, GPRS is supported, and the GPRS indicator is present. The GPRS indicator consists of the fields "RA COLOUR" and "SI13 POSITION" (bits number 26-29 in the octets) to arrange the packet switched service. From the point of view of the invention is important the last bit x, which is a spare bit.

With a syntax used in standards the contents of the SI3 rest octets is as follows:

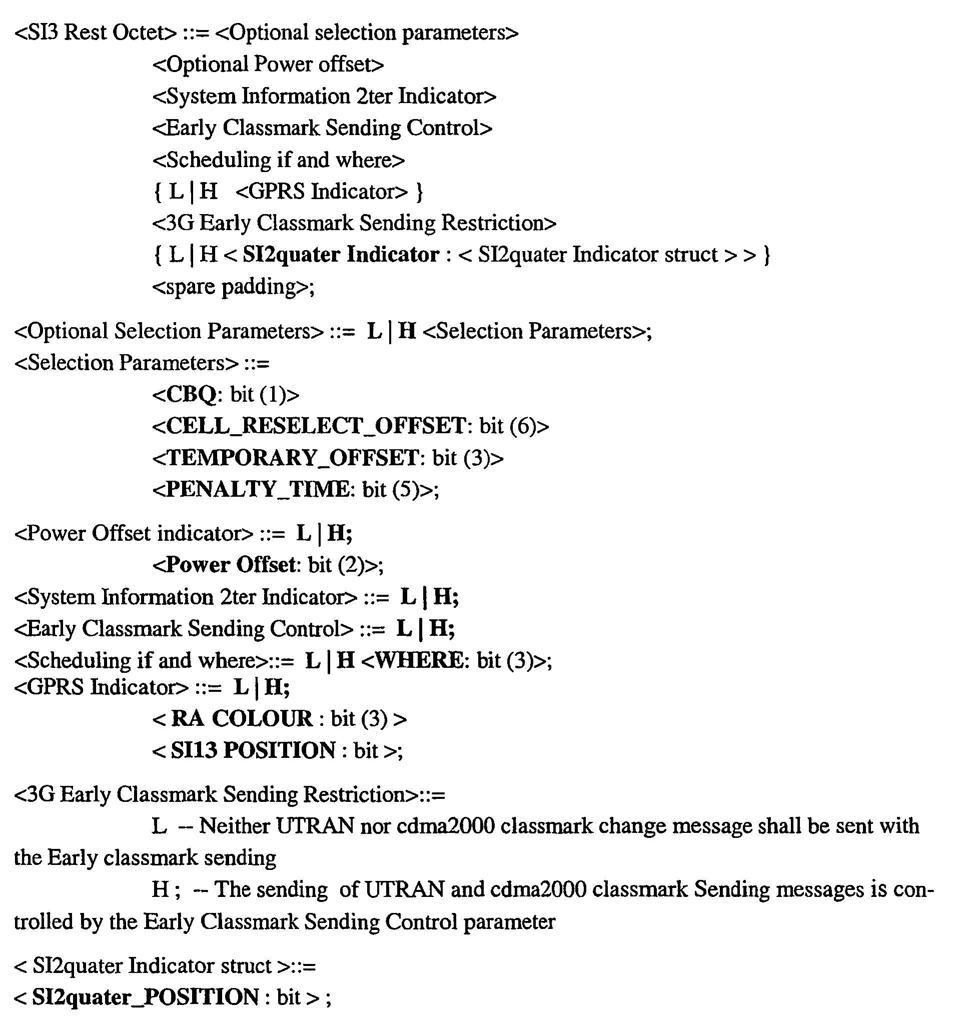

Figure 3 shows an example of the rest part of SI3 message according to the invention. When compared with Figure 2, it is seen that previously unused bit x is now an Iu support indicator **usi**. The state "low" of this bit indicates that the current cell, or the cell in which the message is sent, of a GERAN does not support UMTS service through an Iu interface between this GERAN and 3G type centre of a core network. The state "low" of the Iu support indicator can as well be used in order to prevent any UMTS operation through Iu interface in the current cell, whereupon this cell is barred against UMTS operation. An Iu only mobile station shall not (re)select such a cell, and therefore the cell is barred against Iu only mobile stations. The state "high" of the Iu support indicator bit means that the current cell of a GERAN supports UMTS service through the Iu interface. (Also) in this case said cell can be such that it either supports or does not support the GPRS service. In the example of Figure 3 the cell does not support the GPRS service, for which reason the GPRS indicator is not present. This means that the room of the GPRS indicator, i.e. the room of fields "RA COLOUR" and "SI13 POSITION" in Figure 2, is released. The released room is used to place the Iu indicator field. This field is formed, in the example of Figure 3, of a bit "SI13alt POSITION" in the spot 30 of the rest octets. The existence of the Iu indicator field means that a SI13alt message is sent including a description of the PBCCH. The state of bit "SI13alt POSITION" indicates, whether the SI13alt message is transferred in a normal BCCH or in BCCH extended by its capacity. When a cell of a GERAN supports the GPRS service, too, there is no room for the Iu indicator field. 3G mobile station can then look for the description of the PBCCH in the SI13 message transferred on the BCCH, on grounds that the GPRS indicator bit is present.

Corresponding the changes in accordance with the invention the line 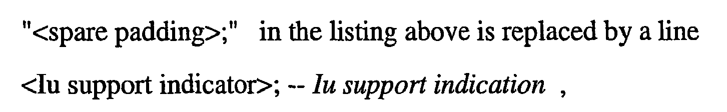 and to the end of the listing are added lines

```
            <Iu support indicator> :: = L|H|H <Iu indicator>;
            <Iu indicator> :: = <SI13alt POSITION: bit >;
```

where "SI13alt POSITION" defines the minimum schedule for where the SI13alt message is sent as:
0 SI13alt message is sent on the channel BCCH normal
1 SI13alt message is sent on the channel BCCH extended.

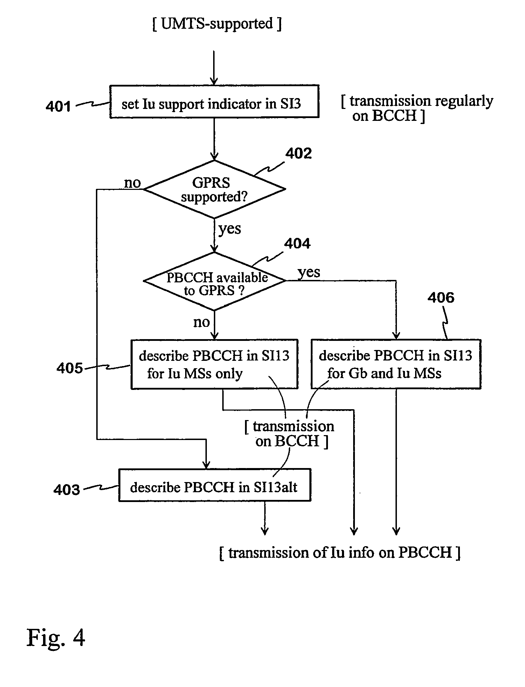

Fig. 4 shows as a flow chart an example of the method for indicating a possibility to use 3G mobile communication network according to the invention. The starting point then is that a cell of the radio access network in question supports the UMTS service, concerning at least a part of the cells being under control of the radio access network. In step 401 is formed a message SI3 so that the Iu support indicator bit is included in the message. The SI3 message is sent at relatively short intervals on the BCCH. In step 402 it is checked whether said cell supports the GPRS service. If not, the PBCCH is described, according to step 403, in a SI13alt message so that Iu mobile stations will be able to get Iu information from PBCCH. SI13alt message is sent on the BCCH, and it is illegible to other than Iu mobile stations; they ignore the message. If said cell supports the GPRS service, it is checked in the SI13 message whether PBCCH and PCCCH are available to GPRS (step 404). If not, the PBCCH is described for Iu mobile stations only, according to step 405, in a SI13 message. That message is sent on the BCCH, and its PBCCH description part is illegible to other than Iu mobile stations. If the PBCCH is available to GPRS, the PBCCH is described (step 406) in a SI13 message, sent on the BCCH, for Iu mobile stations and for GPRS mobile stations. The same PBCCH channel is then used to transfer both GPRS and Iu information.

In all cases the Iu information is sent on the PBCCH.

An Iu mobile station, camped on a GERAN cell, which offers UMTS service, operates in a way corresponding to the above-explained:
- If in a SI3 message received from the BCCH, the mobile station detects the GPRS indicator being not present and if it finds the Iu support indicator bit being in state "high", it shall assume that GPRS is not supported and Iu is supported in the cell. Then it shall read the Iu indicator where it finds the field "SI13alt POSITION". The mobile station will then read the SI13alt message from the BCCH, normal or extended depending on the SI13alt position, and decode the description of the PBCCH therein. It will then be able to read the Iu information from the PBCCH.
- If in a SI3 message received from the BCCH, the mobile station detects the GPRS indicator being present and if it finds the Iu support indicator bit being in state "high", it shall assume that both GPRS and Iu are supported in the cell, and that no Iu indicator is included in the SI3 message. The mobile station will then read the SI13 message from the BCCH, normal or extended depending on the SI13 position in the GPRS indicator, and decode the description of the PBCCH therein. It will then be able to read the Iu information from the PBCCH.
- If the mobile station finds the Iu support indicator bit being in state "low" in a SI3 message received from the BCCH, it shall assume Iu is not supported in the cell and shall operate as a 1G or 2G mobile station, which can use services provided through A and Gb interfaces.

Above it was described the principle of the invention. The invention is not limited just to the described matter. It can be applied in different ways within the scope defined by the independent claim.

## Claims

1. A method for broadcasting of a possibility to use UMTS service in a cell under control of a GERAN type radio access network having an Iu interface to a 3G core network, a radio resource management system of the radio access network comprising a first and a second message, which messages are transferred on a first broadcast control channel in said cell, and which first message has at least one spare bit (x), **characterized in that** said first message is System Information 3 of GSM system, said spare bit (x) is used (401) for indicating, whether said cell supports an UMTS service, and in a favourable case
- a second broadcast control channel is described (403; 405; 406) in the second message to at least mobile stations capable of using UMTS service through GERAN Iu interface, or Iu mobile stations, and
- UMTS service information for Iu mobile stations is broadcast on the second broadcast control channel.

2. The method of claim 1, wherein said first channel is BCCH of the GSM system and said second channel is PBCCH of the GSM system.

3. The method of claim 1, wherein said first message further comprises an Iu indicator field (SI13alt POSITION) and said second message is System Information 13alt of the GSM system and is legible only to Iu mobile stations, when the radio access network supports the UMTS-service and does not support a GPRS service.

4. The method of claim 1, said second message being System Information 13 of the GSM system, when the radio access network supports both the UMTS service and a GPRS service.

5. A method of claim 4, said message System Information 13 being legible only to Iu mobile stations and mobile stations capable of using GPRS service through GERAN Gb interface, when the second channel is available also to the GPRS service.

6. A method of claim 4, a description of the second channel in the message System Information 13 being legible only to Iu mobile stations, when the second channel is not available to the GPRS service.

7. A method of claim 3, wherein said Iu indicator field (SI13alt POSITION) indicates, whether normal BCCH or extended BCCH is used to transfer the second message.

8. The method of claim 1, wherein said cell is barred against UMTS operation through Iu interface by indicating with said spare bit (x) that UMTS service is not supported in said cell.

## Patentansprüche

1. Verfahren zum Rundsenden einer Möglichkeit einen UMTS-Dienst in einer Zelle unter Steuerung Funk-Zugriffs-Netzwerks eines GERAN-Typs mit einer Iu-Schnittstelle zu einem 3G-Kem-Netzwerk zu verwenden, wobei ein Funk-Ressourcen Verwaltungssystem des Funk-Zugriffs-Netzwerks eine erste und eine zweite Meldung umfasst, wobei die Meldungen auf einem ersten Rundsende-Steuerkanal in der Zelle übertragen werden und die erste Meldung mindestens ein freies Bit (x) aufweist, **dadurch gekennzeichnet, dass** die erste Meldung System-Information 3 eines GSM-Systems ist, das freie Bit (x) verwendet wird (401), um anzuzeigen, ob die Zelle einen UMTS-Dienst unterstützt und in einem positiven Fall
- ein zweiter Rundsende-Steuerkanal in der zweiten Meldung an zumindest Mobilstationen beschrieben wird (403; 405; 406), welche imstande sind, einen UMTS-Dienst durch eine GERAN-Iu-Schnittstelle oder Iu-Mobilstationen zu verwenden, und
- UMTS-Dienstinformationen für Iu-Mobilstationen auf dem zweiten Rundsende-Steuerkanal rundgesendet werden.

2. Verfahren nach Anspruch 1, wobei der erste Kanal ein BCCH des GSM-Systems ist und der zweite Kanal ein PBCCH des GSM-Systems ist.

3. Verfahren nach Anspruch 1, wobei die erste Meldung weiter ein Iu-Anzeigefeld (SI13alt POSITION) umfasst und die zweite Meldung System-Information 13al des GSM-Systems ist und nur für Iu-Mobilstationen lesbar ist, wenn das Funk-Zugriffs-Netzwerk den UMTS-Dienst unterstützt und keinen GPRS-Dienst unterstützt.

4. Verfahren nach Anspruch 1, wobei die zweite Meldung System-Information 13 des GSM-Systems ist, wenn das Funk-Zugriffs-Netzwerk sowohl den UMTS-Dienst als auch einen GPRS-Dienst unterstützt.

5. Verfahren nach Anspruch 4, wobei die Meldung System-Information 13 nur für Iu-Mobilstationen und Mobilstationen, welche imstande sind, einen GPRS-Dienst durch eine GERAN Gb-Schnittstelle zu verwenden, lesbar ist, wenn der zweite Kanal auch für den GPRS-Dienst verfügbar ist.

6. Verfahren nach Anspruch 4, wobei eine Beschreibung des zweiten Kanals in der Meldung System-Information 13 nur dann für Iu-Mobilstationen lesbar ist, wenn der zweite Kanal nicht für den GPRS-Dienst verfügbar ist.

7. Verfahren nach Anspruch 3, wobei das Iu-Anzeigefeld (SI13alt POSITION) anzeigt, ob normaler BCCH oder erweiterter BCCH verwendet wird, um die zweite Nachricht zu übertragen.

8. Verfahren nach Anspruch 1, wobei die Zelle für UMTS-Betrieb durch eine Iu-Schnittstelle gesperrt ist, durch Anzeigen mit dem freien Bit (x), dass ein UMTS-Dienst in der Zelle nicht unterstützt wird.

## Revendications

1. Procédé de diffusion d'une possibilité d'utilisation de service UMTS dans une cellule sous contrôle d'un réseau d'accès radio de type GERAN ayant une interface Iu avec un réseau central 3G, un système de gestion de ressources radio du réseau d'accès radio comprenant un premier et un second message, lesquels messages sont transférés sur un premier canal de contrôle de diffusion dans ladite cellule, et lequel premier message a au moins un bit disponible (x), **caractérisé en ce que** ledit premier message est System Information 3 du système GSM, ledit bit disponible (x) est utilisé (401) pour indiquer si ladite cellule supporte un service UMTS, et dans un cas favorable
- un second canal de contrôle de diffusion est décrit (403 ; 405 ; 406) dans le second message destiné au moins aux stations mobiles capables d'utiliser le service UMTS par le biais de l'interface Iu GERAN, ou stations mobiles Iu, et
- des informations de service UMTS pour les stations mobiles Iu sont diffusées sur le second canal de contrôle de diffusion.

2. Procédé selon la revendication 1, dans lequel ledit premier canal est BCCH du système GSM et ledit second canal est PBCCH du système GSM.

3. Procédé selon la revendication 1, dans lequel ledit premier message comprend en outre un champ indicateur Iu (SI13alt POSITION) et ledit second message est System Information 13alt du système GSM et est lisible uniquement pour les stations mobiles Iu, lorsque le réseau d'accès radio supporte le service UMTS et ne supporte pas un service GPRS.

4. Procédé selon la revendication 1, dans lequel ledit second message est System Information 13 du système GMS, lorsque le réseau d'accès radio supporte à la fois le service UMTS et un service GPRS.

5. Procédé selon la revendication 4, dans lequel ledit message System Information 13 est lisible uniquement pour les stations mobiles Iu et les stations mobiles capables d'utiliser un service GPRS par le biais de l'interface Gb GERAN, lorsque le second canal est également disponible pour le service GPRS.

6. Procédé selon la revendication 4, dans lequel une description du second canal dans le message System Information 13 est lisible uniquement pour les stations mobiles Iu, lorsque le second canal n'est pas disponible pour le service GPRS.

7. Procédé selon la revendication 3, dans lequel ledit champ indicateur Iu (SI13alt POSITION) indique si un BCCH normal ou un BCCH étendu est utilisé pour transférer le second message.

8. Procédé selon la revendication 1, dans lequel ladite cellule est bloquée par rapport à une opération UMTS par le biais de l'interface Iu en indiquant à l'aide dudit bit disponible (x) que le service UMTS n'est pas supporté par ladite cellule.
